# EUROPÄISCHE PATENTSCHRIFT

(11) **EP 1 171 273 B1**
(45) Veröffentlichungstag und Bekanntmachung des Hinweises auf die Patenterteilung: **10.11.2004**
(21) Anmeldenummer: 00922607.7
(22) Anmeldetag: 05.04.2000
(51) Int. Cl.: B29C 44/34, C08J 9/18, C08J 9/16

(54) **VERFAHREN ZUM VERFORMEN VON HOHLKÖRPERPLATTEN AUS THERMOPLASTISCHEM MATERIAL**
METHOD FOR SHAPING HOLLOW PLATES MADE OF THERMOPLASTIC MATERIAL
PROCEDE POUR FAçONNER DES PLAQUES CREUSES EN MATIERE THERMOPLASTIQUE

(30) Priorität: 26.04.1999 DE 19918783
(43) Veröffentlichungstag der Anmeldung: 16.01.2002
(73) Patentinhaber: KR-Porsiplast Verpackungssysteme GmbH, 76461 Muggensturm (DE)
(72) Erfinder: FEURER, Markus, D-76316 Malsch (DE)
(74) Vertreter: Schmitt, Martin, Dipl.-Ing.
(86) Internationale Anmeldenummer: PCT/EP2000/003012
(87) Internationale Veröffentlichungsnummer: WO 2000/064656

(56) Entgegenhaltungen:
- EP-A- 0 558 989
- EP-A- 0 646 619
- EP-A- 0 778 310

## Beschreibung

Die Erfindung betrifft ein Verfahren zum Verformen von Hohlkörperplatten aus thermoplastischem Material, welche wenigstens einen Gaseinschluß mit einer Wandung aufweisen, wobei die zu verformende Hohlkörperplatte erwärmt wird.

Aus praktischer Anwendung bekannt sind gattungsgemäße Verfahren, im Rahmen derer Hohlkörperplatten aus thermoplastischem Material mit der vorstehend beschriebenen Ausbildung erwärmt, dadurch erweicht und anschließend im erweichten Zustand beispielsweise mittels Tiefzieheinrichtungen oder Pressen verformt werden. Probleme ergeben sich im Falle der gängigen Verfahren aufgrund des Umstandes, daß sich das in dem oder den Gaseinschlüssen anstehende Medium mit der Hohlkörperplatte erwärmt und aufgrund der Erhöhung seiner Temperatur expandiert. Mit dieser Expansion verbunden ist eine unerwünschte Deformierung der Wandung der Gaseinschlüsse bis hin zu deren Aufplatzen.

Gattungsfremder Stand der Technik wird offenbart durch EP 0 646 619 A, EP 0 778 310 A und EP 0 558 989 A.

Dabei betrifft EP 0 646 619 A ein Verfahren zur Herstellung von Formteilen aus geschäumten Polymerpartikeln, im Rahmen dessen die verwendeten Polymerpartikel zur Anpassung an die verwendete Form zu deformieren sind. EP 0 778 310 A beschreibt ein Verfahren zur Herstellung von Polyolefin-Schaumstoffpartikeln, bei dem angeschäumte Partikel weiter aufgeschäumt und folglich ebenfalls deformiert werden. EP 0 558 989 A schließlich hat ein Verfahren zur Herstellung strukturierter Oberflächen an Schaumstoff-Formkörpern zum Gegenstand, das darauf abzielt, das Gefüge des den Formkörper bildenden Schaumstoffs in dem betreffenden Oberflächenbereich durch Behandlung mit Wärme und Druck aufzulösen.

Den vorstehenden Nachteil des gattungsgemäßen Standes der Technik zu beseitigen, hat sich die vorliegende Erfindung zum Ziel gesetzt.

Erfindungsgemäß gelöst wird diese Aufgabe dadurch, daß im Laufe eines Verfahrens der eingangs beschriebenen Art die Wandung des oder der Gaseinschlüsse außen vollflächig druckbeaufschlagt und die zu verformende Hohlkörperplatte bei derartiger vollflächiger Druckbeaufschlagung der Wandung des oder der Gaseinschlüsse erwärmt wird. Durch die vollflächige Druckbeaufschlagung wird auf die Wandung des oder der Gaseinschlüsse von außen ein Druck ausgeübt, der dem sich infolge der Erwärmung der Hohlkörperplatte erhöhenden Innendruck des oder der Gaseinschlüsse entgegenwirkt. Infolgedessen wird die genannte Wandung sowohl an ihrer Innen- als auch an ihrer Außenseite kraftbeaufschlagt und bei sachgerechter Abstimmung des Außendruckes auf den erwärmungsbedingten Innendruck des oder der Gaseinschlüsse vor unerwünschter Verformung und Beschädigung geschützt. Im Idealfall stimmen der Innendruck des oder der Gaseinschlüsse sowie der von außen aufgebrachte Druck zu jedem Zeitpunkt des Erwärmungs- bzw. Verformungsprozesses miteinander überein. Zweckmäßig kann es daher sein, den von außen auf die Wandung des oder der Gaseinschlüsse ausgeübten Druck mit zunehmender Erwärmung der Hohlkörper-platte zu erhöhen.

In bevorzugter Ausgestaltung des erfindungsgemäßen Verfahrens wird die Wandung des oder der Gaseinschlüsse außen zumindest teilflächig über ein fließfähiges Druckmedium druckbeaufschlagt. Bei Verwendung eines fließfähigen Druckmediums läßt sich eine vollflächige Druckbeaufschlagung der Wandung des oder der Gaseinschlüsse besonders sicher gewährleisten. Aufgrund seiner Fließfähigkeit ist ein derartiges Druckmedium insbesondere in der Lage, in das Innere von zu verformenden Hohlkörper-platten einzudringen und an den Wandungen dort befindlicher Gaseinschlüsse den gewünschten Außendruck zu erzeugen. Außerdem läßt sich bei Verwendung eines fließfähigen Druckmediums ein ansonsten möglicherweise erforderlicher Kontakt zwischen der Wandung des oder der Gaseinschlüsse bzw. zwischen der Oberfläche der zu verformenden Hohlkörper-platte und einem Druckstempel vermeiden oder zumindest beschränken. Es besteht erfindungsgemäß die Möglichkeit, Wandungsteile mittels Widerlagern abzustützten, die beispielsweise durch Anlageflächen an der Vorrichtung zur Durchführung des erfindungsgemäßen Verfahrens gebildet werden und gleichzeitig andere Wandungsteile über ein fließfähiges Druckmedium zu beaufschlagen. Gleichermaßen möglich ist es erfindungsgemäß, die Wandung des oder der Gaseinschlüsse außen vollflächig über das fließfähige Druckmedium zu beaufschlagen.

In weiterer bevorzugter Ausgestaltung des erfindungsgemäßen Verfahrens wird ein fließfähiges Druckmedium verwendet, dessen Temperatur die Ausgangstemperatur der zu verformenden Hohlkörper-platte übersteigt. Aufgrund dieser Maßnahme ist es möglich, das Druckmedium nicht nur zur Erzeugung des zum Schutz des oder der Gaseinschlüsse erforderlichen Außendrucks sondern darüber hinaus auch zur Erwärmung Hohlkörper-platte zu nutzen.

Im Rahmen des erfindungsgemäßen Verfahrens kann grundsätzlich nahezu jedes beliebige fließfähige Druckmedium, insbesondere jedes beliebige gasförmige Druckmedium oder jede beliebige Druckflüssigkeit zum Einsatz kommen. Als fließfähiges Druckmedium bevorzugt wird erfindungsgemäß unter Druck stehender Wasserdampf oder erhitztes Drucköl.

Eine vorteilhafte Variante des erfindungsgemäßen Verfahrens zum Verformen von Hohlkörperplatten mit zwei voneinander beabstandeten Decklagen und wenigstens einem zwischen den Decklagen mit Abstand von deren Rändern angeordneten Gaseinschluß ist dadurch gekennzeichnet, daß die Decklagen an ihren Rändern im wesentlichen dicht aneinander gepreßt werden unter Bildung zumindest eines an die Wandung des oder der Gaseinschlüsse außen angrenzenden Hohlraumes und daß die Hohlkörper-platte an wenigstens einer der Decklagen von außen druckbeaufschlagt und bei derartiger Beaufschlagung erwärmt wird. Aufgrund der genannten Verfahrensmaßnahmen läßt sich eine vollflächige äußere Druckbeaufschlagung der Wandung des oder der Gaseinschlüsse durch eine aktive Druckbeaufschlagung lediglich wenigstens einer der Decklagen der Hohlkörperplatten erreichen. Der oder die Hohlräume im Innern der Hohlkörperplatte, welche durch die beschriebene Pressung der Plattenränder entstanden sind, enthalten ein Medium, vorzugsweise Luft, das in seinem Wärmeausdehnungsverhalten dem Inhalt des oder der Gaseinschlüsse, insbesondere dort anstehender Luft, entspricht. Demzufolge dehnt sich der Inhalt des oder der Hohlräume in gleichem Maße aus wie der Inhalt des oder der Gaseinschlüsse der Hohlkörperplatte. Der sich in der Folge einstellende Hohlraum-Innendruck übernimmt dann als Gaseinschluß-Außendruck die Abstützung der Wandung des oder der Gaseinschlüsse.

In bevorzugter Weiterbildung des erfindungsgemäßen Verfahrens ist vorgesehen, daß wenigstens eine der Decklagen der Hohlkörperplatte von außen mit einem fließfähigen Druckmedium beaufschlagt wird.

Zur Erläuterung der Erfindung dienen die nachfolgenden Abbildungen.

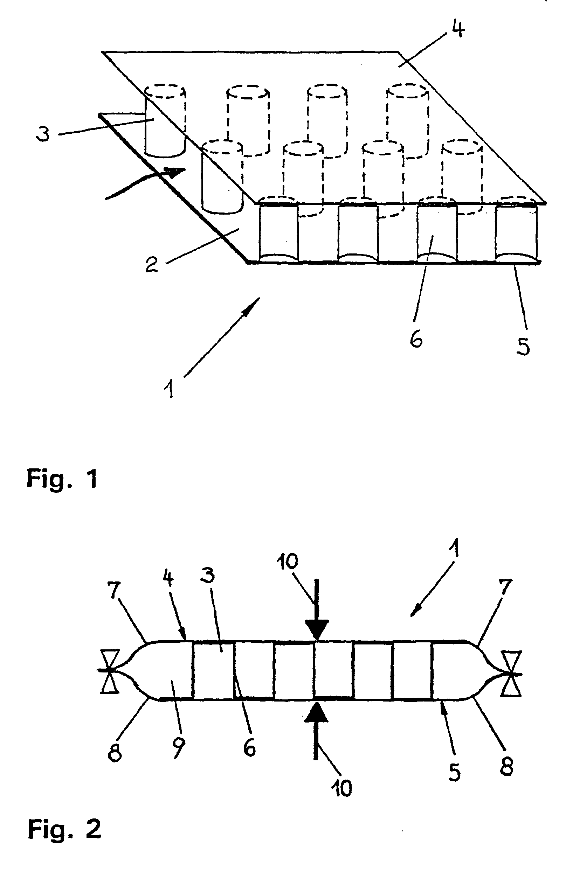

Fig. 1 zeigt schematisch eine perspektivische Ansicht einer Hohlkörperplatte 1 aus Polypropylen, wie sie beispielsweise zur Herstellung von Verpackungsbehältern oder der Kofferraumböden von Kraftfahrzeugen verwendet wird. Die Hohlkörperplatte 1 ist dreilagig aufgebaut. Eine Zwischenlage 2 mit unten offenen napfartigen Ausformungen 3 ist mit einer oberen Decklage 4 und einer unteren Decklage 5 verschweißt. Die napfartigen Ausformungen 3 sind mit Abstand voneinander angeordnet und bilden mit Wandungen 6 Luft enthaltende Gaseinschlüsse, die gegen das Äußere der Hohlkörperplatte 1 gasdicht abgeschlossen sind. Ein Teil der Wandungen 6 wird von der unteren Decklage 5 gebildet.

Im Rahmen des durch Fig. 1 veranschaulichten Verfahrens wird die Hohlkörperplatte 1 zur Verformung in einer Druckkammer angeordnet, in welche dann als an sich fließfähiges Druckmedium unter Druck stehender Wasserdampf aufgegeben wird. Der Wasserdampf umgibt die Hohlkörperplatte 1 an den Außenseiten der oberen Decklage 4 sowie der unteren Decklage 5 und strömt überdies - wie in Fig. 1 durch einen Pfeil angedeutet - in die zwischen den napfartigen Ausformungen 3 verbleibenden Zwischenräume der Zwischenlage 2. Insgesamt ergibt sich eine vollflächige Druckbeaufschlagung der Wandungen 6 der napfartigen Ausformungen 3 von außen durch den Wasserdampf. Dieser Außendruck wirkt der sich infolge der Erwärmung der Hohlkörperplatte 1 durch den Wasserdampf einstellenden Erhöhung des Innendrucks der napfartigen Ausformungen 3 entgegen und bewirkt dadurch, daß die napfartigen Ausformungen 3 ihre gezeigte Form beibehalten, ohne sich unerwünscht zu deformieren oder gar aufzuplatzen.

Eine zweite Verfahrensvariante sei anhand von Fig. 2 erläutert. Diese Darstellung zeigt schematisiert eine Hohlkörperplatte 1 der in Fig. 1 gezeigten Art in der Draufsicht auf deren Stirnseite.

Unter Erwärmung werden umlaufende Ränder 7, 8 der oberen Decklage 4 sowie der unteren Decklage 5 über den gesamten Umfang der Hohlkörperplatte 1 dicht aneinander gepreßt. Infolgedessen ergibt sich im Innern der Hohlkörperplatte 1 ein zusammenhängender, an die Wandungen 6 der napfartigen Ausformungen 3 unmittelbar angrenzender, luftgefüllter Hohlraum 9, der luftdicht gegen das Äußere der Hohlkörperplatte 1 abgeschlossen ist. Mit derart abgedichtetem Hohlraum 9 wird die Hohlkörperplatte 1 in einer Druckkammer an ihren Decklagen 4, 5 von außen mit unter Druck stehendem Wasserdampf beaufschlagt. Der von dem Wasserdampf auf die Hohlkörperplatte 1 ausgeübte Druck ist in Fig. 2 mittels Pfeilen 10 veranschaulicht.

Infolge der Erwärmung der Hohlkörperplatte 1 durch den Wasserdampf dehnen sich die Luft im Innern der napfartigen Ausformungen 3 sowie die Luft im Innern des Hohlraumes 9 in gleichem Maße aus. An den vertikalen Teilen der Wandungen der napfartigen Ausformungen 3 stellt sich daher ein Gleichgewicht von Innenund Außendruck der napfartigen Ausformungen 3 ein. Eine Deformierung der Wandungen 6 der napfartigen Ausformungen 3 in radialer Richtung ist dadurch ausgeschlossen. Eine Deformierung der die zylindrischen napfartigen Ausformungen 3 in deren axialer Richtung begrenzenden Teile der Wandungen 6 wird durch den mittels des Wasserdampfes auf die obere Decklage 4 sowie die untere Decklage 5 der Hohlkörperplatte 1 ausgeübten und dem sich erhöhenden Innendruck der napfartigen Ausformungen 3 entgegenwirkenden Druck verhindert. Insgesamt ergibt sich also auch im Rahmen des Verfahrens nach Fig. 2 eine vollflächige Druckbeaufschlagung der Wandungen 6 der napfartigen Ausformungen 3 von außen.

Im Falle beider vorstehend beschriebener Verfahren setzt die eigentliche Verformung der Hohlkörperplatte 1 beispielsweise mittels eines Druckstempels ein, sobald die Hohlkörperplatte 1 durch Erwärmen mittels des Wasserdampfes hinreichend erweicht ist. Nach dem Verformungsvorgang wird das erhaltene Formteil durch Abkühlen stabilisiert, ehe es der Druckkammer entnommen bzw. aus dieser ausgeworfen werden kann. Die vollflächige äußere Druckbeaufschlagung der Wandungen 6 der napfartigen Ausformungen 3 wird aufrechterhalten, solange die Gefahr einer temperatur- bzw. innendruckbedingten Deformierung oder Beschädigung der Wandungen 6 besteht.

## Patentansprüche

1. Verfahren zum Verformen von Hohlkörper-platten (1) aus thermoplastischem Material, welche wenigstens einen Gaseinschluß (3) mit einer Wandung (6) aufweisen, wobei die zu verformende Hohlkörperplatte (1) erwärmt wird, wobei die Wandung (6) des oder der Gaseinschlüsse (3) außen vollflächig druckbeaufschlagt und die zu verformende Hohlkörper-platte (1) bei derartiger vollflächiger Druckbeaufschlagung der Wandung (6) des oder der Gaseinschlüsse (3) erwärmt wird.

2. Verfahren nach Anspruch 1, **dadurch gekennzeichnet, daß** die Wandung (6) des oder der Gaseinschlüsse (3) außen zumindest teilflächig über ein fließfähiges Druckmedium druckbeaufschlagt wird.

3. Verfahren nach einem der vorhergehenden Ansprüche, **dadurch gekennzeichnet, daß** ein fließfähiges Druckmedium verwendet wird, dessen Temperatur die Ausgangstemperatur der zu verformenden Hohlkörper-platte (1) übersteigt.

4. Verfahren nach einem der vorhergehenden Ansprüche, **dadurch gekennzeichnet, daß** als fließfähiges Druckmedium ein gasförmiges Druckmedium, insbesondere unter Druck stehender Wasserdampf, verwendet wird.

5. Verfahren nach einem der vorhergehenden Ansprüche, **dadurch gekennzeichnet, daß** als fließfähiges Druckmedium eine Druckflüssigkeit, insbesondere erhitztes Drucköl, verwendet wird.

6. Verfahren nach einem der vorhergehenden Ansprüche, wobei die Hohlkörperplatten (1) zwei voneinander beabstandete Decklagen (4, 5) und wenigstens einen zwischen den Decklagen (4, 5) mit Abstand von deren Rändern angeordneten Gaseinschluß (3) aufweisen, **dadurch gekennzeichnet, daß** die Decklagen (4, 5) an ihren Rändern (7, 8) im wesentlichen dicht aneinander gepreßt werden unter Bildung zumindest eines an die Wandung (6) des oder der Gaseinschlüsse (3) außen angrenzenden Hohlraumes (9) und daß die Hohlkörper-platte (1) an wenigstens einer der Decklagen (4, 5) von außen druckbeaufschlagt und bei derartiger Druckbeaufschlagung erwärmt wird.

7. Verfahren nach einem der vorhergehenden Ansprüche, **dadurch gekennzeichnet, daß** wenigstens eine der Decklagen (4, 5) der Hohlkörperplatten (1) von außen mit einem fließfähigen Druckmedium beaufschlagt wird.

## Claims

1. Method for shaping hollow body plates (1) of thermoplastic material which comprise at least one gas occlusion (3) with a wall (6), wherein the hollow body plate which is to be shaped is heated, wherein the wall (6) of the gas occlusion(s) (3) is externally pressurised all over, and the hollow body plate (1) which is to be shaped is heated when the wall (6) of the gas occlusion(s) (3) is pressurised all over in this way.

2. Method according to Claim 1, **characterised in that** the wall (6) of the gas occlusion(s) (3) is externally pressurised at least in part by a flowable pressure medium.

3. Method according to any one of the preceding Claims, **characterised in that** a flowable pressure medium is used whose temperature exceeds the starting temperature of the hollow body plate (1) which is to be shaped.

4. Method according to any one of the preceding Claims, **characterised in that** a gaseous pressure medium, in particular pressurised water vapour, is used as the flowable pressure medium.

5. Method according to any one of the preceding Claims, **characterised in that** a pressure fluid, in particular heated pressure oil, is used as the flowable pressure medium.

6. Method according to any one of the preceding Claims, wherein the hollow body plates (1) comprise two spaced covering layers (4, 5) and at least one gas occlusion (3) disposed between the covering layers (4, 5) at a spacing from the edges thereof, **characterised in that** the covering layers (4, 5) are pressed substantially tightly against one another at their edges (7, 8) while forming at least one void (9) externally adjoining the wall (6) of the gas occlusion(s) (3), and that the hollow body plate (1) is pressurised from outside at least at one of the covering layers (4, 5) and heated while being pressurised in this way.

7. Method according to any one of the preceding Claims, **characterised in that** a flowable pressure medium acts from outside on at least one of the covering layers (4, 5) of the hollow body plates (1).

## Revendications

1. Procédé pour façonner des plaques de corps creux (1) en matière thermoplastique qui présentent au moins une inclusion de gaz (3) avec une paroi (6), sachant que la plaque de corps creux (1) à façonner est chauffée, que la paroi (6) de l'inclusion ou des inclusions de gaz (3) est mise sous pression à l'extérieur sur toute sa surface et que la plaque de corps creux (1) à façonner est chauffée lors d'une telle mise sous pression de l'ensemble de la surface de la paroi (6) de l'inclusion ou des inclusions de gaz (3).

2. Procédé selon la revendication 1, **caractérisé en ce qu'**au moins une partie de la surface de la paroi (6) de l'inclusion ou des inclusions de gaz (3) est mise sous pression à l'extérieur par le biais d'un fluide sous pression.

3. Procédé selon l'une des revendications précédentes, **caractérisé en ce que** l'on utilise un fluide sous pression dont la température dépasse la température initiale de la plaque de corps creux (1) à façonner.

4. Procédé selon l'une des revendications précédentes, **caractérisé en ce que** le fluide sous pression utilisé est un gaz sous pression, notamment de la vapeur d'eau sous pression.

5. Procédé selon l'une des revendications précédentes, **caractérisé en ce que** le fluide sous pression utilisé est un liquide sous pression, notamment de l'huile sous pression chauffée.

6. Procédé selon l'une des revendications précédentes, dans lequel les plaques de corps creux (1) présentent deux couches extérieures (4, 5) espacées l'une de l'autre et au moins une inclusion de gaz (3) disposée entre les couches extérieures (4, 5) à distance des bords de ces dernières, **caractérisé en ce que** les couches extérieures (4, 5) sont pressées essentiellement hermétiquement l'une contre l'autre au niveau de leurs bords (7, 8) en formant au moins une cavité (9) adjacente à l'extérieur de la paroi (6) de l'inclusion ou des inclusions de gaz (3), et **en ce que** la plaque de corps creux (1) est mise sous pression de l'extérieur au niveau d'au moins l'une des couches extérieures (4, 5) et est chauffée lors d'une telle mise sous pression.

7. Procédé selon l'une des revendications précédentes, **caractérisé en ce qu'**au moins l'une des couches extérieures (4, 5) des plaques de corps creux (1) est sollicitée de l'extérieur par un fluide sous pression.
